# EUROPEAN PATENT APPLICATION

(11) **EP 4 176 771 A1**
(43) Date of publication of application: **10.05.2023**
(21) Application number: 21833140.3
(22) Date of filing: 30.06.2021
(51) Int. Cl.: A47C 7/62, H01H 13/16, B60N 2/90

(54) **LOAD DETECTION SENSOR UNIT**

(30) Priority: 01.07.2020 JP 2020114368
(71) Applicant: Fujikura Ltd., Tokyo 135-8512 (JP)
(72) Inventor: KIKUKAWA, Naohiro, Sakura-shi, Chiba 285-8550 (JP)
(74) Representative: Grünecker Patent- und Rechtsanwälte PartG mbB
(86) International application number: PCT/JP2021/024705
(87) International publication number: WO 2022/004776

(57) **Abstract**

A load detection sensor unit (SU) includes a load detection sensor (70) having a switch (SW) including a first electrode (71) and a metal plate (72), a substrate (5) having a placement surface 5S on which the load detection sensor (70) is placed, an upper case (4) having an upper surface (47S) that receives a pressing force from a seat cushion (SC) and a first pusher (43), a pressing member (90) having an upper surface (91S) pressed by the first pusher (43) and a second pusher (92) that presses the metal plate (72) by the pressing force received by the upper surface (91S), a lower case (3) that restricts movement of the upper case (4), and a lid member (80) that restricts movement of the pressing member (90). The lower case (3) makes the angle of the upper surface (47S) with respect to the placement surface 5S changeable and sets the movable amount of the upper case (4) in the direction parallel to the placement surface (5S) to a predetermined amount, and the lid member (80) sets the movable amount of the pressing member (90) in the direction parallel to the placement surface (5S) to be smaller than the predetermined amount.

## Description

### Technical Field

The present invention relates to a load detection sensor unit.

### Background Art

As one of safety systems in vehicles, an alarm system that warns a passenger that a seat belt is not worn at the time of riding has been put into practical use. In this alarm system, a warning is issued when wearing of a seat belt is not sensed in a state where seating of a person is sensed. As a device for sensing the seating of a person, a load detection sensor unit for detecting a load due to seating may be used.

As such a load detection sensor unit, there is one arranged under a seat cushion of a seat. Patent Literature 1 listed below discloses such a load detection sensor unit. This load detection sensor unit includes a load detection sensor that has a switch including a pair of electrodes facing each other while being separated from each other, a placement member that has a placement surface on which the load detection sensor is placed, a pressing member that has a pressure receiving surface that receives a pressing force from the seat cushion and a pusher, and a locking member in which the pressing member is locked. In this load detection sensor unit, the pressing member is locked to the locking member so as to be movable in a direction perpendicular to the placement surface, moves toward the placement surface by a pressing force from the seat cushion received by the pressure receiving surface, and presses one electrode of the pair of electrodes by the pusher. There is formed a gap between the pressing member and the locking member in a direction parallel to the placement surface, and the pressing member can be inclined with respect to the placement surface. Therefore, in this load detection sensor unit, even when the lower surface of the seat cushion is inclined, the pressure receiving surface can follow the inclination. According to this load detection sensor unit, the pressure receiving surface is appropriately pressed against the lower surface of the seat cushion, so that the load can be appropriately detected.

[Patent Literature 1] WO 2016/159123 A

### Summary of Invention

In this load detection sensor unit, as described above, since the gap is formed between the pressing member and the locking member in the direction parallel to the placement surface, the pressing member is movable in the direction parallel to the placement surface. The movable amount of the pressing member in the direction parallel to the placement surface tends to increase as the changeable range of the angle of the pressure receiving surface with respect to the placement surface becomes wider. Therefore, when the changeable range of the angle of the pressure receiving surface with respect to the placement surface is extended in order to enhance the followability of the pressure receiving surface to the inclination of the lower surface of the seat cushion, the movable amount of the pressing member in the direction parallel to the placement surface increases. Accordingly, for example, when the pressure receiving surface is repeatedly pressed against the seat cushion, the pressing member moves in the direction parallel to the placement surface, and the position in the electrode pressed by the pusher of the pressing member may change. When the position in the electrode pressed by the pusher changes, the load when the switch of the load detection sensor is turned on tends to change. For this reason, there is a demand for suppressing a change in the load when the switch of the load detection sensor is turned on so that the load can be appropriately detected.

Therefore, an object of the present invention is to provide a load detection sensor unit capable of appropriately detecting a load.

In order to achieve the above object, a load detection sensor unit of the present invention includes: a load detection sensor that includes a switch formed by a pair of electrodes facing each other while being separated from each other; a placement member that includes a placement surface on which the load detection sensor is placed; a first pressing member that includes a first pressure receiving surface that is located on a side opposite to the placement member side with respect to the load detection sensor and receives a pressing force from a seat cushion, and a first pusher that is located between the first pressure receiving surface and the load detection sensor; a second pressing member that includes a second pressure receiving surface that is located between the load detection sensor and the first pusher and is pressed against the first pusher by the pressing force from the seat cushion, and a second pusher that presses an electrode on a side opposite to the placement member side in the pair of electrodes by a pressing force from the first pusher received by the second pressure receiving surface; a first regulating member that regulates movement of the first pressing member; and a second regulating member that regulates movement of the second pressing member, in which the first regulating member makes an angle of the first pressure receiving surface with respect to the placement surface changeable, and sets a movable amount of the first pressing member with respect to the load detection sensor in a direction parallel to the placement surface, to a predetermined amount, and the second regulating member sets a movable amount of the second pressing member with respect to the load detection sensor in the direction parallel to the placement surface to be smaller than the predetermined amount.

When this load detection sensor unit is arranged under the seat cushion such that the lower surface of the seat cushion and the first pressure receiving surface of the first pressing member face each other, for example, the lower surface of the seat cushion is lowered due to seating, so that the seat cushion presses the first pressure receiving surface, and the first pusher presses the second pressure receiving surface of the second pressing member. The second pusher of the second pressing member presses one of the pair of electrodes, the pair of electrodes comes into contact with each other, and the switch is turned on, so that the load due to the seating can be detected. In this load detection sensor unit, the first regulating member makes the angle of the first pressure receiving surface with respect to the placement surface changeable as described above. Therefore, according to this load detection sensor unit, for example, even when the lower surface of the seat cushion is inclined, the first pressure receiving surface can follow the inclination, the first pressure receiving surface is appropriately pressed against the lower surface of the seat cushion, and the load can be appropriately detected. In this load detection sensor unit, the second regulating member sets the movable amount of the second pressing member in the direction parallel to the placement surface so as to be smaller than the movable amount of the first pressing member in this direction. Therefore, the maximum shift amount of the position where the second pusher of the second pressing member presses one electrode is smaller than the maximum shift amount of the position where the first pusher of the first pressing member presses the second pressure receiving surface. Therefore, the maximum shift amount of the pressed position in one electrode is reduced as compared with a case where the load detection sensor unit does not have the second pressing member and presses one electrode by the first pusher of the first pressing member. Therefore, according to this load detection sensor unit, as compared with the case as described above, it is possible to reduce the amount of change in the load when the switch of the load detection sensor is turned on, whereby the load can be appropriately detected.

The first pusher may extend from the first pressure receiving surface side to the second pressure receiving surface side and press the second pressure receiving surface at a distal end. When the first pusher presses the second pressure receiving surface, the entire second pressure receiving surface may be located inside an outer edge of the distal end of the first pusher as viewed along the extending direction of the first pusher.

With such a configuration, it is possible to suppress inclination of the second pressing member with respect to the pressing direction by the first pusher when the first pusher presses the second pressure receiving surface, as compared with a case where a portion of the second pressure receiving surface is located outside the outer edge of the distal end of the first pusher as viewed along the extending direction of the first pusher. Therefore, according to the load detection sensor unit, the pressing force applied to the first pressing member can be appropriately transferred to the second pressing member, whereby the load can be more appropriately detected.

In this case, the distal end of the first pusher may have a planar shape, and the second pressure receiving surface may have a planar surface.

With such a configuration, even if the first pressing member moves in the direction parallel to the placement surface, the entire second pressure receiving surface can be pressed by the distal end of the first pusher. Therefore, according to this load detection sensor unit, as compared with the case where the distal end of the first pusher has a convex curved shape, even if the first pressing member moves in the direction parallel to the placement surface, the pressing force applied to the first pressing member can be more appropriately transferred to the second pressing member, whereby the load can be more appropriately detected.

Alternatively, the distal end of the first pusher may include a spherical region having a spherical shape recessed to the side opposite to the second pressure receiving surface side, the outer shape of the second pressure receiving surface may be circular, and when the first pusher presses the second pressure receiving surface, a central region of the second pressure receiving surface may be in non-contact with the spherical region, and at least a portion of an outer peripheral region surrounding the central region may be in contact with the spherical region.

With such a configuration, in a state where the most recessed point in the spherical region coincides with the center of the second pressure receiving surface as viewed along the extending direction of the first pusher, the outer peripheral region of the second pressure receiving surface comes into contact with the spherical region over the entire circumference. In a state where the first pressing member has moved in the direction parallel to the placement surface with respect to the second pressing member and the most recessed point in the spherical region has shifted from the center of the second pressure receiving surface as viewed along the extending direction of the first pusher, the side opposite to the side of the direction in which the first pressing member has moved in the outer peripheral region of the second pressure receiving surface comes into contact with the spherical region. Therefore, a force acts on the spherical region in the direction opposite to the direction in which the first pressing member has moved, and a force acts on the second pressing member in the direction in which the first pressing member has moved. The forces acting on the first pressing member and the second pressing member as described above are forces that reduce the amount of shift between the most recessed point in the spherical region and the center of the second pressure receiving surface as viewed along the extending direction of the first pusher. Therefore, according to this load detection sensor unit, the position of the first pressing member with respect to the second pressing member can be made difficult to change when the first pusher presses the second pressure receiving surface, as compared with a case where the distal end of the first pusher has a convex curved shape. Therefore, the pressing force applied to the first pressing member can be more appropriately transferred to the second pressing member, whereby the load can be more appropriately detected.

The load detection sensor unit may further include a coil spring that supports the first pressing member from the placement member side, the first pressing member may further have a fitting part to which one end portion of the coil spring is fitted, and the fitting part may include a plurality of ribs that presses the one end portion of the coil spring from the center toward the outside of the coil spring.

With such a configuration, when no pressing force is applied to the first pressure receiving surface of the first pressing member, it is possible to suppress the coil spring from moving and contacting another member, which may result in generation of abnormal noise due to the contact. In addition, it is possible to relieve the movement of the first pressing member when the first pusher presses the second pressure receiving surface of the second pressing member according to the pressing force applied to the first pressure receiving surface. Therefore, according to this load detection sensor unit, even if the first pressing member comes into contact with a member other than the second pressing member, the impact of the first pressing member on the other member is reduced, and as a result, abnormal noise can be suppressed. When the coil spring contracts, the distance between strands constituting the coil spring in the extending direction of the coil spring decreases. Therefore, the area of the portion in contact with the strand in the fitting part fitted to the one end of the coil spring tends to increase when the coil spring contracts. However, with the above configuration, it is possible to reduce the amount by which the area of the portion of the fitting part in contact with the strand increases according to the contraction of the coil spring, as compared with a case where the fitting part includes a cylindrical boss press-fitted into the internal space of the coil spring, for example. Therefore, according to the load detection sensor unit, as compared with the above-described case, it is possible to reduce the frictional force generated between the fitting part and the coil spring when the coil spring contracts, whereby the load can be detected more appropriately.

In this case, the coil spring may be made of a metal material, an electrode in the pair of electrodes on a side opposite to the placement member side may be a portion of a metal plate convexly curved toward the second pusher side, and the second pusher may come into contact with the metal plate by the pressing force exerted on the second pressure receiving surface from the first pusher to press the metal plate.

In this load detection sensor unit, the members that are mainly deformed when the switch of the load detection sensor is turned on are the coil spring made of a metal material and the metal plate. For example, in a case where the electrode in the pair of electrodes pressed by the second pusher is formed on a flexible resin sheet and the second pusher presses the electrode together with the resin sheet, the members that are mainly deformed when the switch is turned on are the coil spring made of a metal material, the electrode, and the resin sheet. Since the resin sheet has a larger amount of change in elastic modulus due to temperature than the metal plate, when the electrode is formed on the resin sheet as described above, the load at the time of turn-on of the switch tends to change depending on the temperature. On the other hand, with the above configuration, the member that is mainly deformed when the switch is turned on is a member made of a metal material, and it is possible to suppress the load at the time of turn-on of the switch from changing depending on the temperature.

As described above, according to the present invention, it is possible to provide a load detection sensor unit that is capable of appropriately detecting a load.

### Brief Description of Drawings

FIG. 1 is an exploded view of a configuration of a load detection device that includes a load detection sensor unit of the present invention.
FIG. 2 is a cross-sectional view of the load detection device in FIG. 1 that is attached to an S spring.
FIG. 3 is a view of an upper case as seen from a lower case side.
FIG. 4 is an enlarged view of a portion including a load detection unit in FIG. 2.
FIG. 5 is a perspective view of the load detection device that is attached to the S spring.
FIG. 6 is a diagram illustrating an equivalent circuit of a load detection sensor.
FIG. 7 is a diagram illustrating an on state of the load detection sensor.
FIG. 8 is a diagram illustrating a load detection device that includes a load detection sensor unit according to a modification, similarly to FIG. 4.
FIG. 9 is a diagram illustrating a load detection device that includes a load detection sensor unit according to another modification, similarly to FIG. 4.
FIG. 10 is a diagram illustrating a state in which an upper case moves in a direction parallel to a placement surface with respect to a pressing member.

### Description of Embodiments

Hereinafter, modes for implementing a load detection sensor unit according to the present invention will be exemplified with reference to the accompanying drawings. The embodiments exemplified below are intended to facilitate understanding of the present invention and are not intended to limit the present invention. The present invention can be modified and improved from the following embodiments without departing from the gist thereof. In the present specification, dimensions of members may be exaggerated for easy understanding.

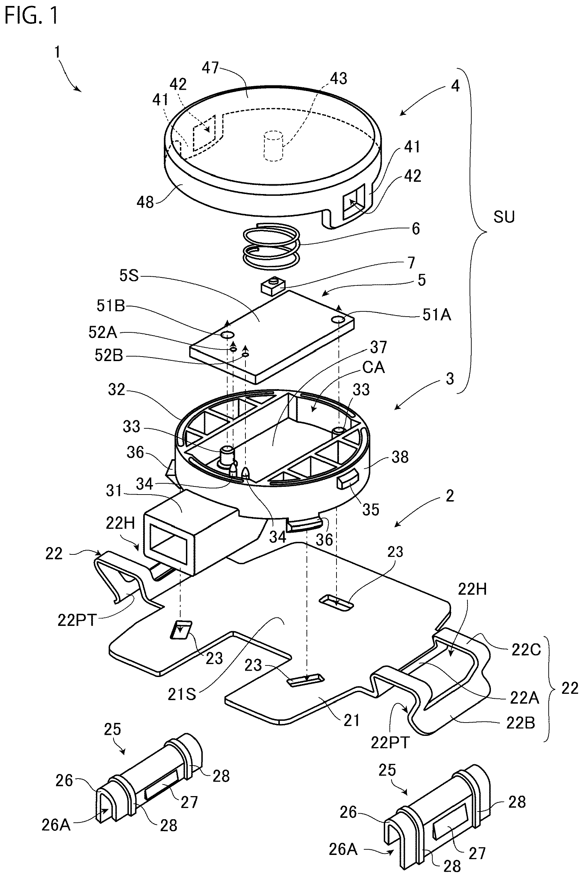

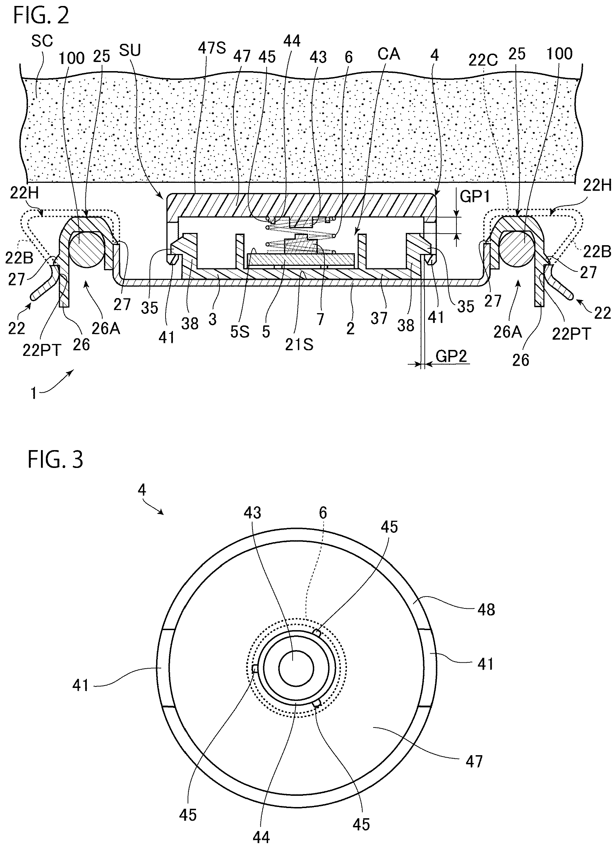

FIG. 1 is an exploded view of a configuration of a load detection device that includes a load detection sensor unit of the present embodiment, and FIG. 2 is a cross-sectional view of the load detection device 1 of FIG. 1 that is attached to an S spring of a seat device. FIG. 2 is a cross-sectional view of the load detection device 1 on a plane along the horizontal direction of the seat device. As illustrated in FIGS. 1 and 2, the load detection device 1 mainly includes a support plate 2, a pair of buffer members 25, and a load detection sensor unit SU placed on the support plate 2. In the present embodiment described below, the load detection device 1 is a seating detection device.

The support plate 2 includes a placement part 21 on which the load detection sensor unit SU is placed, and a pair of hook parts 22 that is connected to the placement part 21. An upper surface of the placement part 21 is a placement surface 21S on which the load detection sensor unit SU is placed. The placement part 21 has a plurality of through holes 23 that penetrates the placement part 21 from the placement surface 21S to a surface that is opposite to the placement surface 21S and constitutes a lower surface of the placement part 21. The support plate 2 is formed by molding a metal plate, for example, and in this case, the plate thickness is 0.8 mm, for example.

The pair of hook parts 22 is provided at positions facing each other with the placement part 21 interposed therebetween. The pair of hook parts 22 has the same configuration and includes an inner wall portion 22A, an outer wall portion 22B, and an upper wall portion 22C. The buffer members 25 are arranged in a space surrounded by the wall portions 22A, 22B, and 22C. In the present embodiment, the pair of hook parts 22 each has an opening 22H formed from the inner wall portion 22A to the outer wall portion 22B, and has a pressing portion 22PT bent so as to protrude toward the placement part 21, below the outer wall portion 22B.

Each of the buffer members 25 includes a buffer main body 26, a pair of locking claws 27, and a pair of guides 28. The buffer main body 26 has a substantially inverted U-shaped cross section, and includes a groove 26A into which an S spring 100 can be partially fitted. In a state where the S spring 100 is arranged in the groove 26A, the S spring 100 is sandwiched in the buffer main body 26, and the S spring 100 is fitted to the buffer main body 26. The locking claws 27 are provided on the side wall of the buffer main body 26 on the placement part 21 side and the side wall opposite to the placement part 21 side. One locking claw 27 is hooked to the edge of the opening 22H of the inner wall portion 22A, and the other locking claw 27 is hooked to the edge of the opening 22H of the outer wall portion 22B. In the buffer main body 26, the pair of guides 28 is formed from the placement part 21 side to the side opposite to the placement part 21 side, and the pair of guides 28 sandwiches the hook part 22. Therefore, in a state where the buffer member 25 is attached to the hook part 22, positional shift between the buffer member 25 and the hook part 22 is suppressed.

In a state where the S springs 100 are fitted in the grooves 26A of the buffer main bodies 26, the support plate 2 and the S springs 100 are fixed in a certain positional relationship via the buffer members 25. In this state, the pressing portions 22PT of the hook parts 22 press the buffer members 25 toward the S springs 100 by the elasticity of the hook parts 22, whereby the support plate 2 and the S springs 100 are firmly fixed. The pressing portions 22PT are located below the lowermost position of the S springs 100.

In the present embodiment, the pair of hook parts 22 is fitted via the buffer members 25 into the pair of adjacent S springs 100 among the plurality of S springs 100 stretched side by side in the opening of the frame in the seat device of the vehicle. Therefore, the hook parts 22 are locking parts that lock the support plate 2 to the S springs 100. In the present embodiment, the pair of hook parts 22 is arranged in the lateral direction of the seat device and is formed so as to be fitted into the pair of S springs 100 adjacent in the lateral direction. In a state where the pair of hook parts 22 is fitted into the pair of adjacent S springs 100 in this manner, the placement part 21 is located below the seat cushion SC placed on the plurality of S springs 100, and the placement part 21 is arranged between the pair of S springs 100 when the plurality of S springs is viewed from above. The configuration for locking the support plate 2 to the S springs 100 is not particularly limited.

The load detection sensor unit SU mainly includes a lower case 3, an upper case 4 as a first pressing member, a substrate 5 as a placement member, a coil spring 6 as an elastic support member, and a load detection unit 7. FIG. 2 does not describe the inside of the load detection unit 7.

The lower case 3 includes a connector part 31 connected to a vehicle control unit (not illustrated) and a housing part 32 connected to the connector part 31. The housing part 32 has a bottom wall 37 and a frame wall 38. The bottom wall 37 and the frame wall 38 form a housing space CA where the substrate 5 and the load detection unit 7 are housed. In the present embodiment, the frame wall 38 is thinned to suppress deformation during resin molding.

A pair of fixing pins 33 and a pair of connection pins 34 are provided on the bottom wall 37 of the housing part 32. The pair of fixing pins 33 is a pin for fixing the substrate 5 housed in the lower case 3. The pair of connection pins 34 is electrically connected to the connector terminals of the connector part 31, and is electrically connected to an electric circuit (not illustrated) formed on the substrate 5. FIG. 1 does not illustrate the connector terminals of the connector part 31.

A pair of protruding pieces 35 is provided on the outer surface of the frame wall 38 of the housing part 32. In the present embodiment, the pair of protruding pieces 35 is provided so as to be aligned in the lateral direction of the seat. A plurality of hook pieces 36 to be fitted into the respective through holes 23 of the support plate 2 is provided at the lower end of the frame wall 38. When the hook pieces 36 are fitted into the through holes 23 of the support plate 2, the lower case 3 is fixed to the support plate 2, and the load detection sensor unit SU is placed on the placement surface 21S of the support plate 2 as described above. Examples of the material for the lower case 3 include resins such as polycarbonate (PC), polyamide (PA), polybutylene terephthalate (PBT), a phenol resin, and an epoxy resin.

The upper case 4 as the first pressing member is a lid member that covers the housing space CA of the housing part 32, and has a top wall 47 and a frame wall 48. A pair of arms 41 is provided at the lower end of the frame wall 48 of the upper case 4. Each of the arms 41 has an opening 42 into which the protruding piece 35 on the frame wall 38 of the housing part 32 in the lower case 3 is fitted. The pair of protruding pieces 35 of the lower case 3 is fitted into the openings 42 in the pair of arms 41, whereby the upper case 4 is locked to the lower case 3. Therefore, in a state where the upper case 4 is locked to the lower case 3, the pair of arms 41 sandwiches the lower case 3 from the lateral direction of the seat.

FIG. 3 is a view of the upper case 4 as seen from the lower case 3 side. FIG. 3 illustrates the coil spring 6 by a broken line. As illustrated in FIGS. 1 to 3, the top wall 47 of the upper case 4 is provided with a first pusher 43 and a boss 44 protruding from the inner surface facing the bottom wall 37 of the housing part 32 in the lower case 3. In the present embodiment, the first pusher 43 is formed in a substantially columnar shape extending toward the bottom wall 37, and the distal end of the first pusher 43 has a planar shape. The first pusher 43 may be formed in a quadrangular prism shape. The boss 44 is formed in an annular shape of which the center substantially coincides with the central axis of the first pusher 43, and surrounds the first pusher 43. The distal end of the first pusher 43 is located closer to the bottom wall 37 than the distal end of the boss 44. The boss 44 is provided with a plurality of ribs 45 protruding from the outer peripheral surface in the radial direction of the boss 44. Although details will be described later, the plurality of ribs 45 is fitted to the coil spring 6, and the coil spring 6 is attached to the top wall 47. FIG. 3 illustrates an example in which the three ribs 45 are provided so as to be positioned at substantially equal intervals in the circumferential direction of the boss 44. Examples of the material for the upper case 4 include the same resins as those for the lower case 3.

The substrate 5 as the placement member is a plate-like member on which the load detection unit 7 is placed on the placement surface 5S which is one surface. The substrate 5 is, for example, an insulating plate-like member having no flexibility, and examples of the material for the substrate 5 include a phenol resin or an epoxy resin.

The substrate 5 has a plurality of through holes penetrating therethrough from the placement surface 5S to a surface opposite to the placement surface 5S, which are fixing through holes 51A and 51B and pin through holes 52A and 52B.

The fixing through holes 51A and 51B are through holes into which the pair of fixing pins 33 on the bottom wall 37 of the housing part 32 in the lower case 3 is inserted. The diameter of the fixing through holes 51A and 51B is substantially the same as the outer diameter of the pair of fixing pins 33.

The pin through holes 52A and 52B are through holes into which the pair of connection pins 34 provided in the lower case 3 is inserted. Provided inside the pin through holes 52A and 52B are terminals (not illustrated). These terminals are provided along the inner peripheral surfaces defining the pin through holes 52A and 52B, and the width of the space surrounded by each terminal is substantially the same as the outer diameter of the connection pin 34. When the connection pins 34 are inserted into the pin through holes 52A and 52B, one connection pin 34 and the terminal provided in the pin through hole 52A into which the connection pin 34 is inserted are electrically connected, and the other connection pin 34 and the terminal provided in the pin through hole 52B into which the connection pin 34 is inserted are electrically connected.

The coil spring 6 as an elastic support member has elasticity and supports the upper case 4 from the substrate 5 side. In the present embodiment, the coil spring 6 is made of a metal material. The coil spring 6 is arranged in a contracted state between the top wall 47 of the upper case 4 and the substrate 5. An end of the coil spring 6 on the substrate 5 side is in contact with the placement surface 5S of the substrate 5, but the end is not fixed to the placement surface 5S. On the other hand, at the end portion of the coil spring 6 on the top wall 47 side, the first pusher 43 and the boss 44 protruding from the top wall 47 are inserted into the internal space of the coil spring 6. The plurality of ribs 45 provided on the boss 44 is press-fitted to the end portion of the coil spring 6 to press the end of the coil spring 6 from the center toward the outside of the coil spring 6, and is fitted to the end portion. As a result, the coil spring 6 is attached to the top wall 47. Therefore, the plurality of ribs 45 constitutes fitting parts to be fitted to the end portion of the coil spring 6. The end portion of the coil spring 6 on the top wall 47 side is also in contact with the inner surface of the top wall 47.

The end portion of the coil spring 6 on the top wall 47 side may not be attached to the top wall 47. However, from the viewpoint of preventing positional shift of the coil spring 6, the end portion of the coil spring 6 is preferably attached to the top wall 47. In addition, the configuration in which the end portion of the coil spring 6 on the top wall 47 side is attached to the top wall 47 is not particularly limited. Alternatively, an end portion of the coil spring 6 on the substrate 5 side may be attached to the substrate 5.

In the upper case 4 supported by the coil spring 6 in this manner, the top wall 47 is lifted upward by the elastic force of the coil spring 6 so as to be separated from the substrate 5, and the lower edges of the openings 42 in the arm 41 are in contact with the protruding pieces 35 on the housing part 32. In such a state, the top wall 47 of the upper case 4 and the lower case 3 are separated from each other to form a gap GP1 between the top wall 47 and the lower case 3. In addition, in such a state, the first pusher 43 of the upper case 4 extends in a direction substantially perpendicular to the placement surface 5S of the substrate 5, and an upper surface 47S of the top wall 47 of the upper case 4 and the placement surface 5S are substantially parallel. The frame wall 48 of the upper case 4 and the lower case 3 are separated from each other to form a gap GP2 between the frame wall 48 and the lower case 3. The gap GP2 is a gap formed in a state where the center of the through hole in the lid member to be described later coincides with the central axis of the first pusher 43 of the upper case 4.

Next, the load detection unit 7 placed on the placement surface 5S of the substrate 5 will be described.

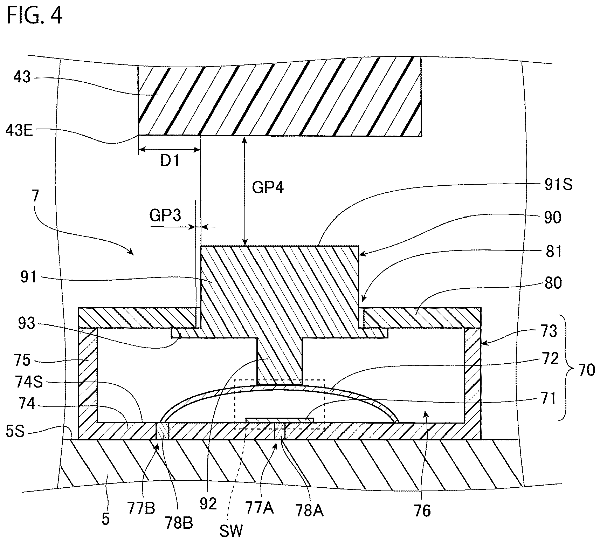

FIG. 4 is an enlarged view of a portion including the load detection unit 7 in FIG. 2. As illustrated in FIG. 4, the load detection unit 7 mainly includes a load detection sensor 70, a lid member 80, and a pressing member 90 as a second pressing member.

First, the load detection sensor 70 will be described. The load detection sensor 70 mainly includes a casing 73, a first electrode 71, and a metal plate 72.

The casing 73 has a bottom wall 74 and a cylindrical frame wall 75 extending along the entire circumference of the outer peripheral edge of the bottom wall 74. The bottom wall 74 and the frame wall 75 form a housing space 76 for housing the first electrode 71 and the metal plate 72. In the present embodiment, the outer shape of the bottom wall 74 is substantially square, and the frame wall 75 is formed in a quadrangular cylindrical shape. The first electrode 71 is arranged on a mounting surface 74S which is the upper surface of the bottom wall 74. The casing 73 is placed on the placement surface 5S such that a lower surface opposite to the mounting surface 74S of the bottom wall 74 faces the placement surface 5S of the substrate 5, and is fixed to the placement surface 5S. As a result, the load detection unit 7 is placed on and fixed to placement surface 5S. The load detection unit 7 fixed to the placement surface 5S in this manner is located in the internal space of the coil spring 6, and the mounting surface 74S is substantially parallel to the placement surface 5S. Examples of the material for the casing 73 include the same resins as those for the lower case 3.

The first electrode 71 is one electrode constituting the switch SW. In the present embodiment, the first electrode 71 is a circular metal printed layer laminated on the mounting surface 74S of the bottom wall 74, and is arranged such that the center of the bottom wall 74 and the center of the first electrode 71 substantially coincide with each other.

The metal plate 72 is a metal plate partially serving as the other electrode constituting the switch SW. In the present embodiment, the metal plate 72 is curved convexly on the side opposite to the first electrode 71 side, and is arranged on the mounting surface 74S of the bottom wall 74 so as to cover the first electrode 71 from above in non-contact with the first electrode 71. At least a portion of the outer peripheral edge of the metal plate 72 is fixed to the mounting surface 74S by a conductive member such as solder, for example. The portion fixed to the mounting surface 74S may sandwich the first electrode 71 in at least a predetermined direction when viewed along a direction perpendicular to the mounting surface 74S, and the entire circumference of the outer peripheral edge of the metal plate 72 may be fixed to the mounting surface 74S. When viewed from the direction perpendicular to the mounting surface 74S, a portion of the metal plate 72 located on the uppermost side substantially coincides with the center of the first electrode 71. Then, the first electrode 71 and a portion of the metal plate 72 face each other while being separated from each other, whereby the switch SW is formed.

In addition, the bottom wall 74 has a first through hole 77A and a second through hole 77B penetrating therethrough from the mounting surface 74S to a lower surface that is a surface opposite to the mounting surface 74S. The first through hole 77A is a through hole of which the opening is located in a region of the mounting surface 74S where the first electrode 71 is arranged. A first conductive member 78A is provided in the first through hole 77A. The terminal provided in the one pin through hole 52A in the substrate 5 and the first electrode 71 are electrically connected via wiring (not illustrated) provided in the first conductive member 78A and the substrate 5. The second through hole 77B is a through hole of which the opening is located in a region of the mounting surface 74S to which the metal plate 72 is fixed. A second conductive member 78B is provided in the second through hole 77B. The terminal provided in the other pin through hole 52B provided in the substrate 5 and the metal plate 72 are electrically connected via the wiring (not illustrated) provided in the second conductive member 78B and the substrate 5, and as a result, the terminal and the second electrode which is a portion of the metal plate 72 are electrically connected.

The lid member 80 is a plate-like member that covers the housing space 76 of the casing 73. The lid member 80 is fixed to an end portion of the frame wall 75 of the casing 73 on the side opposite to the bottom wall 74 side. The lid member 80 has a through hole 81 that is substantially circular in shape and penetrates therethrough from a lower surface which is a surface facing the mounting surface 74S of the bottom wall 74 to an upper surface on a side opposite to the lower surface. When viewed from a direction perpendicular to the mounting surface 74S, the center of the through hole 81 substantially coincides with the center of the first electrode 71. Examples of the material for the lid member 80 include the same resins as those for the lower case 3.

The pressing member 90 as the second pressing member includes a pressure receiver 91 and a second pusher 92. In the present embodiment, the pressure receiver 91 is formed in a cylindrical shape having an outer diameter slightly smaller than the diameter of the through hole 81 of the lid member 80, and is inserted into the through hole 81. Therefore, a gap GP3 is formed between the pressure receiver 91 and the inner peripheral surface of the lid member 80 defining the through hole 81. In a state where the center of the through hole 81 and the central axis of the pressure receiver 91 coincide with each other, this gap GP3 is smaller than the above-described gap GP2 between the frame wall 48 of the upper case 4 and the lower case 3.

The upper surface 91S of the pressure receiver 91 is a substantially circular flat surface substantially parallel to the placement surface 5S of the substrate 5, and is located above the lid member 80. The shape of the upper surface 91S is not particularly limited, and may be a quadrangular shape, for example. As described above, in a state where the lower edges of the openings 42 in the arms 41 of the upper case 4 are in contact with the protruding pieces 35 of the housing part 32 in the lower case 3, a gap GP4 is formed between the upper surface 91S and the distal end of the first pusher 43 in the upper case 4. The gap GP4 is smaller than the gap GP1 between the top wall 47 of the upper case 4 and the lower case 3. In a state where the central axis of the first pusher 43 and the center of the upper surface 91S coincide with each other, the entire upper surface 91S is located inside the outer edge 43E of the distal end of the first pusher 43 when viewed along the extending direction of the first pusher 43. When viewed in this manner, the distance D1 between the outer edge of the upper surface 91S and the outer edge 43E of the distal end of the first pusher 43 is larger than the total value of the gap GP2 between the frame wall 48 of the upper case 4 and the lower case 3 and the gap GP3 between the pressure receiver 91 and the inner peripheral surface of the lid member 80 defining the through hole 81. The distance D1 may be equal to or less than the total value. A flat plate-shaped flange portion 93 protruding in the radial direction from the outer peripheral surface is formed at the lower end of the pressure receiver 91. The flange portion 93 is positioned closer to the bottom wall 74 than the lid member 80, and the upper surface of the flange portion 93 is in contact with the lower surface of the lid member 80. The outer shape of the flange portion 93 is formed in a circular shape larger than the diameter of the through hole 81, and the opening in the through hole 81 on the mounting surface 74S side is closed by the pressure receiver 91. Therefore, in a state where the upper surface of the flange portion 93 is in contact with the lower surface of the lid member 80, the housing space 76 is a space closed by the lid member 80 and the pressure receiver 91, and the first electrode 71 and the metal plate 72 are housed in the housing space 76.

In the present embodiment, the second pusher 92 is formed in a columnar shape extending from the lower surface of the pressure receiver 91 toward the metal plate 72. The central axis of the second pusher 92 substantially coincides with the central axis of the pressure receiver 91, and these central axes substantially coincide with the center of the first electrode 71 when viewed from the direction perpendicular to the mounting surface 74S. The distal end of the second pusher 92 has a planar shape substantially parallel to the upper surface 91S of the pressure receiver 91, and the distal end is in contact with the metal plate 72. Since the upper surface of the flange portion 93 is in contact with the lower surface of the lid member 80 as described above, the portion of the pressing member 90 including the flange portion 93 and the second pusher 92 is held so as to be sandwiched between the lid member 80 and the metal plate 72, and is held so as not to move in the direction perpendicular to the mounting surface 74S. The second pusher 92 may be formed in a quadrangular prism shape, and the distal end of the second pusher 92 may have a curved shape that curves convexly toward the metal plate 72. Examples of the material for the pressing member 90 include the same resins as those for the lower case 3.

In the load detection device 1 having such a configuration, as illustrated in FIG. 2, in a state of being attached to the pair of S springs 100, the upper surface 47S of the top wall 47 of the upper case 4 faces the lower surface of the seat cushion SC at a predetermined distance. The upper surface 47S has a planar shape. The upper surface 47S is a surface pressed by the seat cushion SC, and can be understood as a first pressure receiving surface that is located on the side opposite to the substrate 5 with respect to the load detection sensor 70 and receives a pressing force from the seat cushion SC.

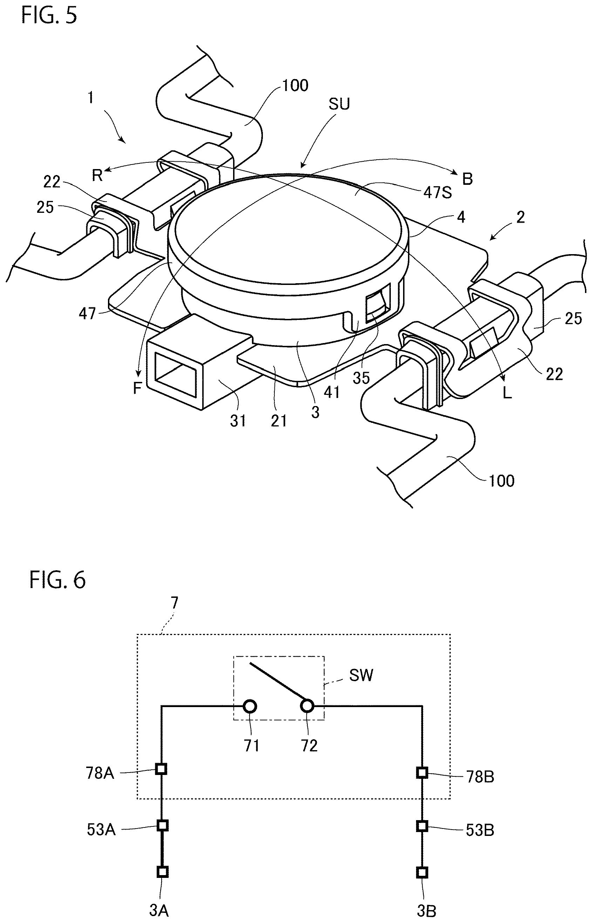

FIG. 5 is a perspective view of the load detection device 1 that is attached to the S springs 100. As described above, in a state where the lower edges of the openings 42 in the arms 41 of the upper case 4 supported by the coil spring 6 are in contact with the protruding pieces 35 of the housing parts 32 of the lower case 3, the gap GP1 is formed between the top wall 47 of the upper case 4 and the lower case 3. Therefore, when the upper surface 47S of the top wall 47 is pressed downward against the elastic force of the coil spring 6, the upper case 4 can move downward. The gap GP2 is formed between the frame wall 48 of the upper case 4 and the lower case 3. Therefore, in a state where the upper case 4 has moved downward, the upper case 4 can move so as to be inclined in an F-B direction (front-rear direction) indicated by an arrow in FIG. 5 with respect to the lower case 3. In addition, the upper case 4 can also move so as to be inclined in an R-L direction indicated by an arrow in FIG. 5 with respect to the lower case 3. Therefore, the angle of the upper surface 47S of the top wall 47 with respect to the placement surface 5S changes in the front-rear direction and the left-right direction of the seat. However, since the pair of arms 41 of the upper case 4 sandwiches the lower case 3 from the lateral direction of the seat device as described above, the angle at which the upper surface 47S can be inclined with respect to the placement surface 5S is larger in the front-rear direction than in the left-right direction of the seat. Since the upper surface 47S is not divided, the entire upper surface 47S moves.

FIG. 6 is a diagram illustrating an equivalent circuit of the load detection sensor 70. As illustrated in FIG. 6, the switch SW (the first electrode 71 and the metal plate 72) is electrically connected between the first conductive member 78A and the second conductive member 78B which are circuit terminals of the load detection sensor 70. The first conductive member 78A is electrically connected to a terminal 53A provided in the one pin through hole 52A in the substrate 5. The terminal 53A is electrically connected to the one connector terminal 3A provided in the connector part 31 of the lower case 3. The second conductive member 78B is electrically connected to a terminal 53B provided in the other pin through hole 52B in the substrate 5. The terminal 53B is electrically connected to the other connector terminal 3B provided in the connector part 31 of the lower case 3. Therefore, when the switch SW is turned on while a voltage is applied between the connector terminals 3A and 3B, the connector terminals 3A and 3B are energized.

Next, detection of a load will be described.

When a person sits on the seat device, the lower surface of the seat cushion SC moves downward by the load of the person, the lower surface presses the upper surface 47S of the upper case 4, and the upper case 4 moves downward by this pressing force. When the lower surface of the seat cushion SC moves downward, the lower surface of the seat cushion SC may be inclined with respect to the S spring surfaces including the respective S springs 100. In such a case, the lower surface of the seat cushion SC is inclined with respect to the upper surface 47S of the upper case 4 as described above. As described above, since the upper case 4 can move so as to be inclined with respect to the placement surface 5S of the substrate 5, the upper surface 47S moves with changes in the angle with respect to the placement surface 5S. Therefore, the upper surface 47S of the upper case 4 can follow the lower surface of the seat cushion SC.

Here, as described above, the gap GP2 is formed between the frame wall 48 of the upper case 4 and the lower case 3. However, when the upper case 4 moves in a direction parallel to the placement surface 5S, the frame wall 48 and the lower case 3 come into contact with each other, and this movement of the upper case 4 stops. Therefore, the lower case 3 can be understood as a first regulating member that regulates the movement of the upper case 4. The movable amount of the upper case 4 in the direction parallel to the placement surface 5S is determined by the size of the gap GP2. Therefore, the lower case 3 that is the first regulating member makes the angle of the upper surface 47S of the top wall 47 with respect to the placement surface 5S changeable, and sets the movable amount of the upper case 4 with respect to the load detection sensor 70 in the direction parallel to the placement surface 5S to a predetermined amount.

When the lower surface of the seat cushion SC further moves downward, the upper case 4 also further moves downward. The first pusher 43 of the upper case 4 is located between the upper surface 47S of the top wall 47 of the upper case 4 and the upper surface 91S of the pressure receiver 91 of the pressing member 90, and no other member is arranged between the first pusher 43 and the upper surface 91S of the pressure receiver 91. Therefore, when the upper case 4 further moves downward, the distal end of the first pusher 43 comes into contact with the upper surface 91S of the pressing member 90 of the load detection unit 7. The upper surface 91S is pressed by the distal end of the first pusher 43, and the pressing member 90 moves downward by the pressing force. Therefore, the upper surface 91S can be understood as a second pressure receiving surface that is located between the first pusher 43 and the upper case 4 and is pressed against the first pusher 43 by the pressing force from the seat cushion SC.

Here, as described above, the gap GP3 is formed between the pressure receiver 91 of the pressing member 90 and the outer peripheral surface of the through hole 81 of the lid member 80. However, when the pressing member 90 moves in the direction parallel to the placement surface 5S, the pressure receiver 91 and the inner peripheral surface defining the through hole 81 come into contact with each other to stop this movement of the pressing member 90. Therefore, the lid member 80 can be understood as a second regulating member that regulates the movement of the pressing member 90 with respect to the load detection sensor 70 in the direction parallel to the placement surface 5S. The gap GP3 is smaller than the gap GP2 between the frame wall 48 of the upper case 4 and the lower case 3. Therefore, the lid member 80 that is the second regulating member makes smaller the movable amount of the pressing member 90 with respect to the load detection sensor 70 in the direction parallel to the placement surface 5S than the movable amount of the upper case 4. For example, the lid member 80 sets this movable amount of the pressing member 90 to be 0.6 times the movable amount of the upper case 4.

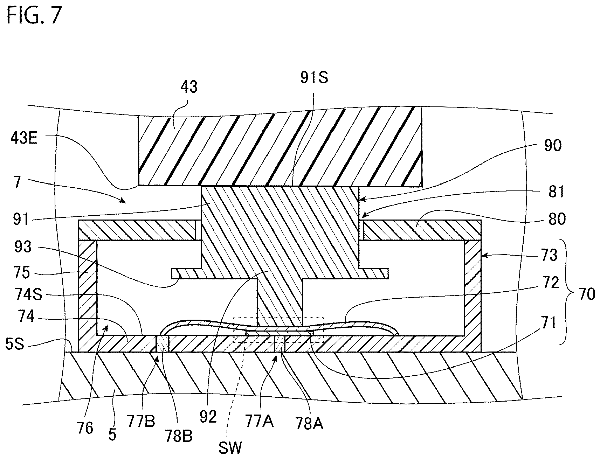

FIG. 7 is a diagram illustrating an on state of the load detection sensor 70. With the downward movement of the pressing member 90, the distal end of the second pusher 92 of the pressing member 90 presses the metal plate 72, and as illustrated in FIG. 7, the metal plate 72 bends and contacts the first electrode 71, and the switch SW of the load detection sensor 70 is turned on. When the switch SW is turned on, the pair of connector terminals 3A and 3B in the connector part 31 is energized, and this energization is detected by a vehicle control unit (not illustrated). In this way, the load due to seating is detected.

As described above, the load detection sensor unit SU of the present embodiment includes the load detection sensor 70, the substrate 5 as the placement member, the upper case 4 as the first pressing member, the pressing member 90 as the second pressing member, the lower case 3 as the first regulating member that regulates the movement of the upper case 4, and the lid member 80 as the second regulating member that regulates the movement of the pressing member 90. The load detection sensor 70 includes the switch SW that includes the first electrode 71 and the second electrode facing each other while being separated from each other, and the second electrode is a portion of the metal plate 72. The substrate 5 has the placement surface 5S on which the load detection sensor 70 is placed. The first electrode 71 in the switch SW is located on the substrate 5 side, and the second electrode that is a portion of the metal plate 72 is located on the opposite side to the substrate 5 side. The upper case 4 includes an upper surface 47S as the first pressure receiving surface that is located on the side opposite to the substrate 5 side with respect to the load detection sensor 70 and receives a pressing force from the seat cushion SC, and the first pusher 43 that is located between the upper surface 47S and the load detection sensor 70. The pressing member 90 is includes the upper surface 91S that is located between the load detection sensor 70 and the upper case 4 and pressed by the first pusher 43 by the pressing force from the seat cushion SC, as the second pressure receiving surface, and presses the metal plate 72 by the pressing force received by the upper surface 91S from the first pusher 43. The lower case 3 makes the angle of the upper surface 47S of the upper case 4 with respect to the placement surface 5S changeable, and sets the movable amount of the upper case 4 with respect to the load detection sensor 70 in the direction parallel to the placement surface 5S to a predetermined amount. The lid member 80 makes smaller the movable amount of the pressing member 90 with respect to the load detection sensor 70 in the direction parallel to the placement surface 5S than the movable amount of the upper case 4.

The load detection sensor unit SU of the present embodiment is placed on the placement surface 21S of the support plate 2, and is arranged under the seat cushion SC such that the lower surface of the seat cushion SC and the upper surface 47S of the upper case 4 face each other. When the lower surface of the seat cushion SC is lowered due to seating, the upper surface 47S of the top wall 47 of the upper case 4 is pressed by the seat cushion SC, and the first pusher 43 presses the upper surface 91S of the pressing member 90. Then, the second pusher 92 of the pressing member 90 presses the metal plate 72, the first electrode 71 and the metal plate 72 come into contact with each other, and the switch SW is turned on, so that the load due to the seating can be detected. In the load detection sensor unit SU of the present embodiment, the lower case 3 makes the angle of the upper surface 47S with respect to the placement surface 5S changeable as described above. Therefore, according to this load detection sensor unit SU of the present embodiment, for example, even when the lower surface of the seat cushion SC is inclined, the upper surface 47S can follow the inclination, the upper surface 47S is appropriately pressed against the lower surface of the seat cushion SC, and the load can be appropriately detected. In the load detection sensor unit SU of the present embodiment, as described above, the lid member 80 makes smaller the movable amount of the pressing member 90 in the direction parallel to the placement surface 5S than the movable amount of the upper case 4 in this direction. Therefore, the maximum shift amount of the position where the second pusher 92 of the pressing member 90 presses the metal plate 72 is smaller than the maximum shift amount of the position where the first pusher 43 of the upper case 4 presses the upper surface 91S. Therefore, as compared with the case where the load detection sensor unit SU does not have the pressing member 90 and presses the metal plate 72 by the first pusher 43 of the upper case 4, the maximum shift amount of the pressed position on the metal plate 72 is reduced. Therefore, according to the load detection sensor unit SU of the present embodiment, as compared with the case as described above, it is possible to reduce the amount of change in the load when the switch SW of the load detection sensor 70 is turned on, whereby the load can be appropriately detected.

In the load detection sensor unit SU of the present embodiment, the first pusher 43 extends from the upper surface 47S side of the top wall 47 of the upper case 4 to the upper surface 91S side of the pressure receiver 91 of the pressing member 90, and presses the upper surface 91S by the distal end. When viewed along the extending direction of the first pusher 43 in a state where the central axis of the first pusher 43 and the center of the upper surface 91S coincides with each other, the distance D1 between the outer edge of the upper surface 91S and the outer edge 43E of the distal end of the first pusher 43 is larger than the total value of the above-described gap GP2 between the frame wall 48 of the upper case 4 and the lower case 3 and the gap GP3 between the pressure receiver 91 and the inner peripheral surface defining the through hole 81 of the lid member 80. Therefore, even if the upper case 4 and the pressing member 90 move in the direction parallel to the placement surface 5S, when the first pusher 43 presses the upper surface 91S, the entire upper surface 91S is located inside the outer edge 43E of the distal end of the first pusher 43 as viewed along the extending direction of the first pusher 43. Therefore, when the first pusher 43 presses the upper surface 91S, it is possible to suppress the pressing member 90 from being inclined with respect to the direction of pressing by the first pusher 43, as compared with a case where a portion of the upper surface 91S of the pressure receiver 91 is located outside the outer edge 43E of the distal end of the first pusher 43 as viewed along the extending direction of the first pusher 43. Therefore, according to the load detection sensor unit SU of the present embodiment, the pressing force applied to the upper case 4 can be appropriately transferred to the pressing member 90, whereby the load can be more appropriately detected.

In the load detection sensor unit SU of the present embodiment, the distal end of the first pusher 43 has a planar shape, and the upper surface 91S of the pressure receiver 91 of the pressing member 90 is a flat surface. Therefore, even if the upper case 4 moves in the direction parallel to the placement surface 5S, the entire upper surface 91S can be pressed by the distal end of the first pusher 43. Therefore, according to the load detection sensor unit SU of the present embodiment, as compared with the case where the distal end of the first pusher 43 has a convex curved shape, even if the upper case 4 moves in the direction parallel to the placement surface 5S, the pressing force applied to the upper case 4 can be more appropriately transferred to the pressing member 90, whereby the load can be more appropriately detected.

The load detection sensor unit SU of the present embodiment includes the coil spring 6 that supports the upper case 4 from the substrate 5 side. Therefore, when no pressing force is applied to the upper surface 47S of the top wall 47 of the upper case 4, it is possible to suppress the upper case 4 from moving and contacting another member, which may result in generation of abnormal noise due to the contact. In addition, it is possible to relieve the movement of the upper case 4 when the first pusher 43 presses the upper surface 91S of the pressure receiver 91 of the pressing member 90 according to the pressing force applied to the upper surface 47S. Therefore, according to the load detection sensor unit SU of the present embodiment, even if the upper case 4 comes into contact with a member other than the pressing member 90, the impact of the upper case 4 on the other member is reduced, and as a result, abnormal noise can be suppressed.

In the load detection sensor unit SU of the present embodiment, the upper case 4 has the plurality of ribs 45 that constitutes fitting parts to which one end portion of the coil spring 6 is fitted. The plurality of ribs 45 presses one end of the coil spring 6 from the center toward the outside of the coil spring 6. When the coil spring 6 contracts, the distance between strands constituting the coil spring 6 in the extending direction of the coil spring 6 decreases. Therefore, the area of the portion in contact with the strand in the fitting part fitted to the one end of the coil spring 6 tends to increase when the coil spring 6 contracts. However, with the above configuration, it is possible to reduce the amount by which the area of the portion of the fitting part in contact with the strand increases according to the contraction of the coil spring 6, as compared with a case where the fitting part includes a cylindrical boss press-fitted into the internal space of the coil spring 6, for example. Therefore, according to the load detection sensor unit SU of the present embodiment, as compared with the above-described case, it is possible to reduce the frictional force generated between the fitting part and the coil spring 6 when the coil spring 6 contracts, whereby the load can be detected more appropriately. From the viewpoint of making it difficult for the coil spring 6 to detach from the upper case 4, the number of the ribs 45 is preferably three or more, and the ribs are preferably arranged at substantially regular interval in the circumferential direction of the coil spring 6.

Although the load detection sensor unit of the present invention has been described by taking the above-described embodiment as an example, the present invention is not limited to the above-described embodiment.

For example, in the above embodiment, the load detection sensor unit SU is arranged below the seat cushion SC of the seat to detect whether a person is seated, as an example. However, the load detection sensor unit SU is available as long as the load detection sensor unit SU detects the presence or absence of a load on the detection target object on which the load is to be detected. For example, there is a form in which the load detection sensor unit SU is arranged below a seat cushion in a care bed. Even in such a form, the load can be appropriately detected when the inclination of the lower surface of the seat cushion changes and descends.

In the above embodiment, the lower case 3 restricts the movement of the upper case 4 so that the angle of the upper surface 47S, which is the first pressure receiving surface, with respect to the placement surface 5S changes in the front-rear direction and the horizontal direction of the seat device, as an example. However, the lower case 3 may regulate the movement of the upper case 4 such that the angle of the upper surface 47S with respect to the placement surface 5S changes only in the front-rear direction, for example.

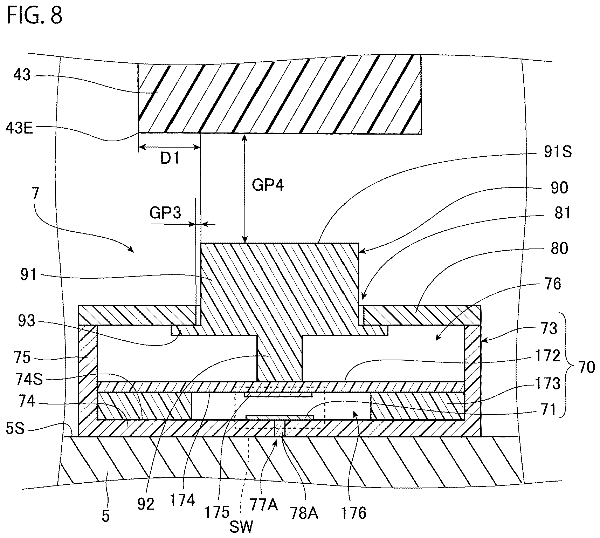

In the above embodiment, the load detection sensor 70 has the switch SW formed by the first electrode 71 stacked on the mounting surface 74S of the bottom wall 74 of the casing 73 and the metal plate 72 curved in a convex shape on the side opposite to the first electrode 71 side, as an example. However, the load detection sensor 70 only needs to include a switch including a pair of electrodes facing each other while being separated from each other. For example, the load detection sensor 70 may have a configuration as illustrated in FIG. 8.

FIG. 8 is a diagram illustrating a load detection device 1 that includes a load detection sensor unit SU according to a modification, similarly to FIG. 4. As illustrated in FIG. 8, the load detection sensor unit SU according to the present modification is different from the load detection sensor unit SU according to the first embodiment described above in that a load detection sensor 70 includes an electrode sheet 172 and a spacer 173 instead of the metal plate 72. It is to be noted that the same or equivalent constituent elements as those of the first embodiment are denoted by the same reference signs, and redundant descriptions thereof will be omitted except when specified otherwise.

The electrode sheet 172 includes a resin sheet 174 made of a flexible resin and a second electrode 175. The resin sheet 174 is disposed at a predetermined interval from the mounting surface 74S of the bottom wall 74 such that one surface faces the mounting surface 74S. The second electrode 175 is provided on the surface of the resin sheet 174 on the mounting surface 74S side. The second electrode 175 is a metal printed layer. Wiring (not illustrated) is formed on the surface of the resin sheet 174 on the mounting surface 74S side, and the second electrode 175 is electrically connected to another connector terminal 3B provided in a connector part 31 of a lower case 3 via the wiring or the like. The spacer 173 is a plate-like insulating member sandwiched between a bottom wall 74 of a casing 73 and the electrode sheet 172, and an opening 176 is formed in the spacer 173. The spacer 173 and the bottom wall 74 are bonded to each other by an adhesive, and the spacer 173 and the electrode sheet 172 are bonded to each other by an adhesive. The spacer 173 and the bottom wall 74 may not be bonded to each other, and the spacer 173 and the electrode sheet 172 may not be bonded to each other. The first electrode 71 and the second electrode 175 face each other while being separated from each other with the opening 176 in between. In the load detection sensor 70, a second pusher 92 presses the electrode sheet 172 by the pressing force exerted on the upper surface 91S of the pressure receiver 91 of the pressing member 90 from the first pusher 43. Then, the electrode sheet 172 bends toward the first electrode 71, and the first electrode 71 and the second electrode 175 come into contact with each other, so that the switch SW is turned on. With the load detection sensor 70, it is possible to appropriately detect a load, similarly to the first embodiment.

From the viewpoint of suppressing the load when the switch is turned on from changing depending on the temperature, as in the first embodiment, it is preferable that the electrode on the opposite side of the substrate 5 side in the pair of electrodes constituting the switch SW is a portion of a metal plate 72 convexly curved toward the second pusher 92 side, and the second pusher 92 comes into contact with the metal plate 72 by the pressing force that the upper surface 91S receives from the first pusher 43 to press the metal plate 72. With such a configuration, members that are mainly deformed when the switch SW of the load detection sensor 70 is turned on are a coil spring 6 and the metal plate 72 made of a metal material. For example, as in the above modification, when the second pusher 92 presses the electrode sheet 172 including the resin sheet 174 and the second electrode 175 made of flexible resin, the members that are mainly deformed when the switch is turned on are the coil spring 6 made of metal material, the second electrode 175, and the resin sheet 174. In general, since the resin sheet has a larger amount of change in elastic modulus due to temperature than the metal plate, in the case described above, the load at the time of turn-on of the switch SW tends to change depending on the temperature. On the other hand, with the configuration as in the first embodiment, the member that is mainly deformed when the switch SW is turned on is a member made of a metal material, and it is possible to suppress the load at the time of turn-on of the switch SW from changing depending on the temperature.

In the above embodiment, the elastic support member that supports the upper case 4 from the substrate 5 side is the coil spring 6 made of a metal material, as an example. However, the elastic support member is not particularly limited, and may be, for example, a coil spring made of a resin material, a leaf spring made of a metal material, or the like. From the viewpoint of suppressing the load when the switch is turned on from changing depending on the temperature as described above, the elastic support member is preferably made of a metal material. The load detection sensor unit SU may include no elastic support member. However, from the viewpoint of suppressing generation of abnormal noise as described above, the load detection sensor unit SU preferably includes an elastic support member.

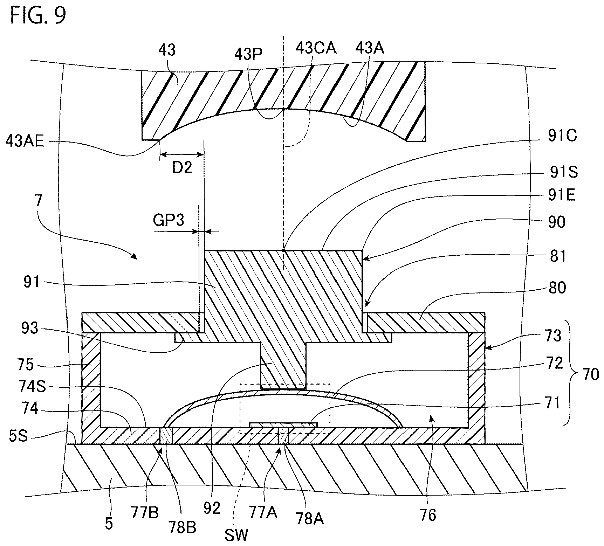

In the above embodiment, the first pusher 43 of which the distal end has a planar shape as an example. However, the shape of the distal end of the first pusher 43 is not particularly limited. For example, the distal end of the first pusher 43 may have a convex curved shape or a shape as illustrated in FIG. 9.

FIG. 9 is a diagram illustrating a load detection device 1 that includes a load detection sensor unit SU according to another modification, similarly to FIG. 4. As illustrated in FIG. 9, the load detection sensor unit SU according to the present modification is different from the load detection sensor unit SU according to the first embodiment described above in that the distal end of a first pusher 43 of an upper case 4 includes a spherical region 43A having a spherical shape recessed to the side opposite to an upper surface 91S of a pressure receiver 91. It is to be noted that the same or equivalent constituent elements as those of the first embodiment are denoted by the same reference signs, and redundant descriptions thereof will be omitted except when specified otherwise.

The spherical region 43A at the distal end of the first pusher 43 has a surface smaller than a hemisphere, and the outer edge of the spherical region 43A has a circular shape smaller than the radius of the spherical surface. A central axis 43CA of the first pusher 43 passes through a most depressed point 43P in the spherical region 43A. In a state where the most depressed point 43P in the spherical region 43A coincides with a center 91C of the circular upper surface 91S when viewed along the extending direction of the first pusher 43, the entire upper surface 91S is located inside the outer edge of the spherical region 43A at the distal end of the first pusher 43. When viewed in this manner, the distance D2 between the outer edge 43AE of the spherical region 43A and the outer edge of the upper surface 91S is larger than the total value of a gap GP2 between a frame wall 48 of the upper case 4 and a lower case 3 and a gap GP3 between a pressure receiver 91 and the inner peripheral surface defining a through hole 81 in a lid member 80. Therefore, even if the upper case 4 and the pressing member 90 move in a direction parallel to a placement surface 5S, when the first pusher 43 presses the upper surface 91S, the entire upper surface 91S is located inside the outer edge 43AE of the spherical region 43A at the distal end of the first pusher 43. Therefore, a central region of the upper surface 91S including the center 91C is not in contact with the spherical region 43A, and a portion of an outer edge 91E of the upper surface 91S is in contact with the spherical region 43A.

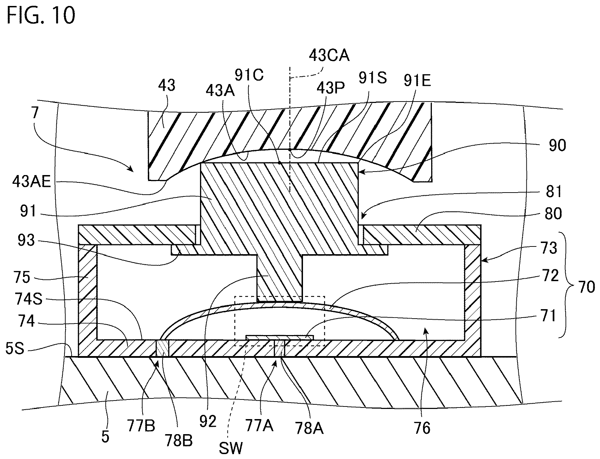

For example, in a state where the most depressed point 43P in the spherical region 43A coincides with the center 91C of the upper surface 91S when viewed along the extending direction of the first pusher 43, the outer edge of the upper surface 91S is in contact with the spherical region 43A over the entire circumference. As illustrated in FIG. 10, in a state where the most depressed point 43P in the spherical region 43A and the center 91C of the upper surface 91S are misaligned when the upper case 4 moves in the direction parallel to the placement surface 5S with respect to the pressing member 90 and is viewed along the extending direction of the first pusher 43, the side of the outer edge 91E of the upper surface 91S opposite to the side in which the upper case 4 has moved is in contact with the spherical region 43A. Therefore, a force acts on the spherical region 43A in the direction opposite to the direction in which the upper case 4 has moved, and a force acts on the pressing member 90 in the direction in which the upper case 4 has moved. The forces acting on the upper case 4 and the pressing member 90 as described above are forces that reduce the amount of shift between the most depressed point 43P of the spherical region 43A and the center 91C of the upper surface 91S when viewed along the extending direction of the first pusher 43. Therefore, according to the load detection sensor unit SU, the position of the upper case 4 with respect to the pressing member 90 can be made difficult to change when the first pusher 43 presses the upper surface 91S, as compared with a case where the distal end of the first pusher 43 has a convex curved shape. Therefore, the pressing force applied to the upper case 4 can be more appropriately transferred to the pressing member 90, whereby the load can be more appropriately detected.

In this manner, from the viewpoint of making it difficult for the position of the upper case 4 with respect to the pressing member 90 to change when the first pusher 43 presses the upper surface 91S, the outer shape of the upper surface 91S is circular, and when the first pusher 43 presses the upper surface 91S, the central region including the center 91C of the upper surface 91S is not in contact with the spherical region 43A, and at least a portion of the outer peripheral region surrounding the central region is in contact with the spherical region 43A. For example, the outer edge 91E of the upper surface 91S may be a curved surface convexly curved outward, and the outer peripheral region of the upper surface 91S may have a curved surface corresponding to the spherical region 43A.

In the above embodiment, the support plate 2 is locked to the S springs as an example. However, the example of the support plate 2 is not limited thereto. For example, the support plate 2 may be provided on the seat pan, or the seat pan itself may be used as a support plate, and the load detection sensor unit SU may be attached to the seat pan.

Note that the components in the load detection sensor unit SU can be appropriately combined, omitted, changed, or a well-known technique can be added thereto without departing from the object of the present application, in addition to the contents of the above-described embodiment and modification.

As described above, according to the present invention, it is possible to provide a load detection sensor unit capable of appropriately detecting a load, which can be used for objects on which a seat cushion is arranged, such as a seat device of a vehicle such as an automobile, a care bed, and the like.

## Claims

1. A load detection sensor unit comprising:
a load detection sensor that includes a switch formed by a pair of electrodes facing each other while being separated from each other;
a placement member that includes a placement surface on which the load detection sensor is placed;
a first pressing member that includes a first pressure receiving surface that is located on a side opposite to the placement member side with respect to the load detection sensor and receives a pressing force from a seat cushion, and a first pusher that is located between the first pressure receiving surface and the load detection sensor;
a second pressing member that includes a second pressure receiving surface that is located between the load detection sensor and the first pusher and is pressed against the first pusher by the pressing force from the seat cushion, and a second pusher that presses an electrode on a side opposite to the placement member side in the pair of electrodes by a pressing force from the first pusher received by the second pressure receiving surface;
a first regulating member that regulates movement of the first pressing member; and
a second regulating member that regulates movement of the second pressing member, wherein
the first regulating member makes an angle of the first pressure receiving surface with respect to the placement surface changeable, and sets a movable amount of the first pressing member with respect to the load detection sensor in a direction parallel to the placement surface, to a predetermined amount, and
the second regulating member sets a movable amount of the second pressing member with respect to the load detection sensor in the direction parallel to the placement surface to be smaller than the predetermined amount.

2. The load detection sensor unit according to claim 1, wherein
the first pusher extends from the first pressure receiving surface side to the second pressure receiving surface side and presses the second pressure receiving surface at a distal end, and
when the first pusher presses the second pressure receiving surface, the entire second pressure receiving surface is located inside an outer edge of the distal end of the first pusher as viewed along the extending direction of the first pusher.

3. The load detection sensor unit according to claim 2, wherein the distal end of the first pusher has a planar shape, and
the second pressure receiving surface is a flat surface.

4. The load detection sensor unit according to claim 2, wherein
the distal end of the first pusher includes a spherical region having a spherical shape recessed to the side opposite to the second pressure receiving surface side,
the outer shape of the second pressure receiving surface is circular, and
when the first pusher presses the second pressure receiving surface, a central region of the second pressure receiving surface is in non-contact with the spherical region, and at least a portion of an outer peripheral region surrounding the central region is in contact with the spherical region.

5. The load detection sensor unit according to any one of claims 1 to 4, further comprising
a coil spring that supports the first pressing member from the placement member side,
wherein
the first pressing member further includes a fitting part to which one end portion of the coil spring is fitted, and
the fitting part includes a plurality of ribs configured to press one end portion of the coil spring from a center side toward an outside of the coil spring.

6. The load detection sensor unit according to claim 5,
wherein the coil spring is made of a metal material,
an electrode in the pair of electrodes on a side opposite to the placement member side is a portion of a metal plate convexly curved toward the second pusher side, and
the second pusher comes into contact with the metal plate by the pressing force exerted on the second pressure receiving surface from the first pusher to press the metal plate.
